# EUROPEAN PATENT APPLICATION

(11) **EP 2 617 290 A1**
(43) Date of publication of application: **24.07.2013**
(21) Application number: 13386002.3
(22) Date of filing: 16.01.2013
(51) Int. Cl.: A23C 1/08, A23C 9/142, A23C 9/152, A23C 9/156, A23L 1/29, A23C 9/16

(54) **Plain, flavored or nutritionally fortified donkey milk powders and an integrated method for the production there of**

(30) Priority: 19.01.2012 GR 2012100041
(71) Applicant: Petrotos, Konstantinos, 41222 Larisa (GR); D'Alessandro, Angela Gabriela, 70022 Altamura (IT); Martemucci, Giovanni, 70010 Capurso (IT)
(72) Inventor: Petrotos, Konstantinos, 41222 Larisa (GR); D'Alessandro, Angela Gabriela, 70022 Altamura (IT); Martemucci, Giovanni, 70010 Capurso (IT)

(57) **Abstract**

In this invention it is claimed a novel and economic combination of known processes allowing for the production of finished products which have got as a major constituent donkey's milk powder. This way three respective products a) plain powder; b) flavored powder; c) nutritionally fortified powder with improved caloric value, aiming at serving specific nutritional needs of certain population target groups, such as adults with specific diet requirements, elderly people and infants, respectively.

A novel and economic combination of: 1) ceramic tubular microfiltration through membranes with pores sizes 0.7 µm-1.4 µm to sanitize the milk 2) reverse osmosis or nanofiltration to concentrate the sanitized milk at low temperature 3) optional addition of aroma and/or high quality extra virgin olive oil by encapsulation in milk proteins and 4) as a final step freeze drying, of the plain or nutritional fortified and/or flavored concentrated milk in order to produce microbiologically stable dry powder products.

## Description

The present invention claims the production of a series of products based on donkey's milk and aiming at serving specific nutritional needs of certain population target groups like infants, adults with specific diet requirements and elderly people. It is also claiming a new integrated method which combines effective and well known processing techniques allowing for the production of a finished product which has got as major constituent donkey's milk powder and can be either flavored to improve its acceptance by elderly people, or nutritionally fortified in order to meet the caloric requirements of infants.

In recent years the donkey's milk has concentrated a lot of attention because of its bioactivity which is mainly based on the great amount of lysozyme, lactoferrin and the other bioactive proteins which are included in its composition with not mentioned the low fat content (<0.5% w/w) which is the lowest for all kind of milks and the fatty acid profile which has got an advantageous swift to unsaturated fatty acid (Salimei et al., 2004; Salimei and Chiofalo, 2006; D'Alessandro et al., 2010).

The donkey milk is also quite similar in composition with human milk and bears great healthy quality (Gastaldi et al., 2010). In numerous reports of the international scientific literature an array of application of donkey milk is disclosed-in the nutrition of infants, mainly as a hypoallergenic food for children affected by cow's milk protein allergy or multiple food intolerance (lacono et al., 1992; Carroccio et al., 2000; Gastaldi et al., 2010) as substitute of milk from other species (cows and goats milk), or drink of vegetal origin (soy and rice), as well as in the nutrition of elderly people (Tafaro et al., 2007; Amati et al., 2010; Jirillo et al., 2011).

Despite the various advantages of using donkey milk powder in infant nutrition as food or component of formula, there is a problem because donkey milk is characterized by a low energetic value in comparison to human milk, thus milk addressed to babies needs a fortification to increase its caloric value. For this reason, several papers recommend a series of chemical supplementation like MCT (medium chain triglycerides), sunflower oil etc. (lacono et al., 1992; Carroccio et al., 2000; Restani et al., 2002).

It has to be underlined that the suggested supplementation with extra virgin olive oil has been considered only for milk, and not for the powder milk neither in the form of microencapsulation, which consists a major improvement in our case.

On top of this, the natural flavor of the product most of the time does not fit to the elderly peoples' taste and rather need flavor modification to be more attractive to them and other consumers.

In order to produce donkey's milk powder, spray drying technique has been reported (Di Renzo et al., 2007), but this alters the whey proteins content of milk reducing its nutritional value (Polidori and Vincenzetti, 2010). Freeze drying method performs better in preserving the goodness of the raw material without destroying essential nutrients because of the cryogenic nature of the process (http://www.fedeleche.cl/infotec/d_p_china_200812.pdf; EUROLACTIS GROUP S.A.-www.eurolactis.com).

However, both processes for milk powder production suffer of high energy demand if applied without prior pre-concentration of milk. Moreover, if the raw milk has not been pasteurized, microbiological content exhibit an important critical role considering the restrictive regulation for infant foods.

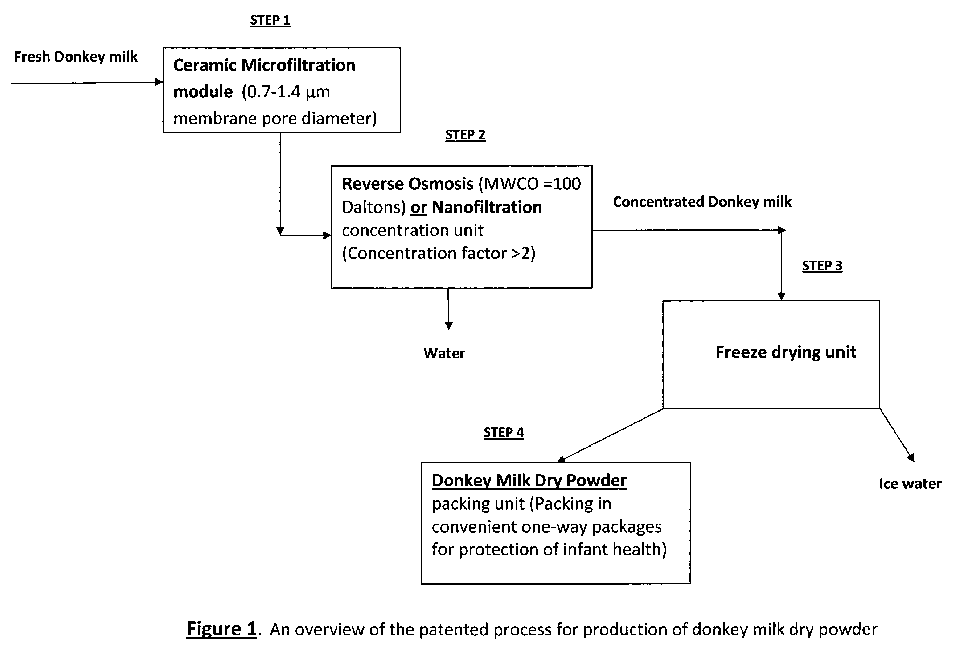

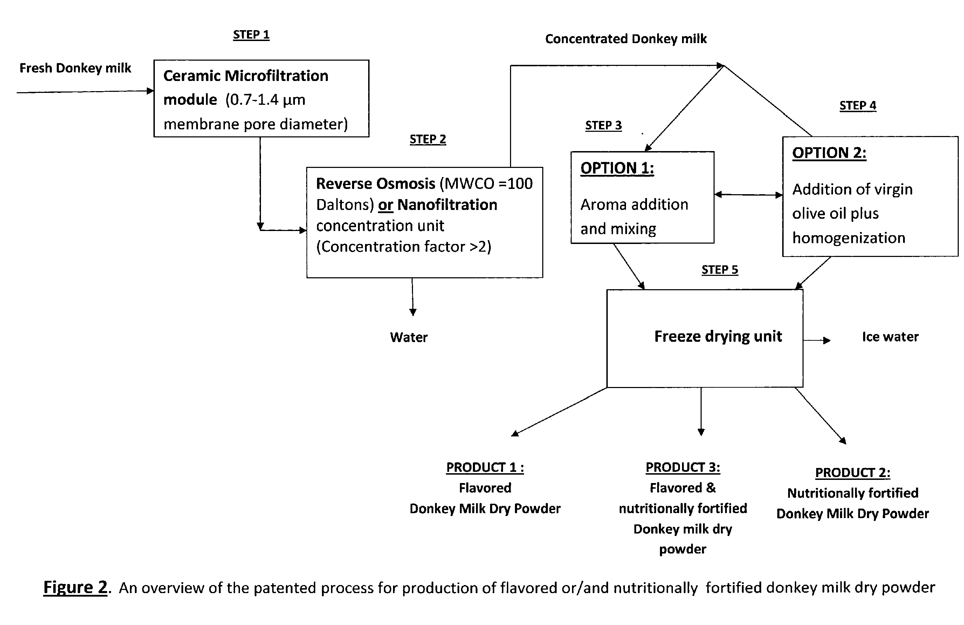

According to the present invention, a novel donkey milk processing set up is presented which incorporates four respective production steps and namely:
1) ceramic microfiltration, to sanitize the milk, according to the following conditions:
   Membrane pores size (diameter) = 0.7-1.4 µm
   Expected flux =20 Liters/m² hr
   Pump velocity > 7 m/sec
   Pressure= 2 - 3 bars
   Operative Temperature = 10 to 30 °C
2) reverse osmosis (RO) or nanofiltration (NF), to concentrate the sanitized milk, with the following conditions:
   RO: Pressure =40-60 bar
      Operative Temperature = 10 to 30 °C
      Velocity of the pump > 5 m/sec
      Expected flux =15 litters/m2 hr
      Rejection of the membrane = at least 99.5 % as sodium chloride
   NF: Pressure =20-27 bar
      Operative Temperature = 10 to 30 °C
      Velocity of the pump > 5 m/sec
      Expected flux =20-25 liters/m² hr
      Molecular Weight Cut off of membrane (MWCO) = 200 Daltons
3) freeze drying, to obtain dry powder, with the following conditions:
   Chamber temperature = -50 to -110 °C
   Vacuum = 4 mm Hg
   Cycles needed =3
4) Optionally, aroma and/or high quality extra virgin olive oil can be added in the concentrated milk just prior of the freeze drying step followed by homogenization and emulsification achieved by either ultrasound technique or by using a conventional homogenizer at high pressure (>1500 bars) or similar technique. This with the aim to ensure encapsulation of olive oil in the protein structure and stabilize it in micro or nano- particles in order to make the product more attractive and/or nutritionally fortify this by increasing its caloric value to meet the particular nutritional requirements of infants or elderly people or people with specific dietetic requirements.
   The total procedure, which is consisted five stages (three main stages and two optional), which is described in Figure 1, and give the potential to produce the three respective new products, as is described in Figure 2.
   Consequently, in this invention it is claimed a novel and economic combination of known processes to obtain donkey milk powder in three potential forms and namely a) plain powder b) flavored powder c) nutritionally fortified powder with improved caloric value.

### References

Amati L, Marzulli G, Martelli M, Tafaro A, Jirillo F, Pugliese V, Martemucci G, D'Alessandro AG, Jirillo E. 2010. Donkey and goat milk intake and modulation of the human aged immune response. Curr Pharm Des, 16(7):864-869.
Carroccio A, Cavataio F, Montaldo G, D'Amico D, Alabrese L, lacono G. 2000.Intolerance to hydrolised cow's milk proteins in infants: clinical characteristics and dietary treatments. Clin Exp Allergy, 30:1597-1603.
Chiofalo, B., Drogoul, C. and E. Salimei. 2006. Other utilisation of mare's and ass's milk. Pages 133-147 in Proc. 3nd European Workshopo on Equine Nutrition, Campobasso, Italy.
D'Alessandro, A.G., Martemucci, G., Jirillo E., De Leo V. 2011. Major whey proteins in donkey's milk: effect of season and lactation stage. Implications for potential dietary interventions in human diseases. Immunopharmacology and Immunotoxicology, 33(2), 259-265.
Di Renzo G.C., Altieri G., Genovese F. Tecniche per il trattamento del latte di asina. Risultati preliminari. Atti 2° Convegno Nazionale sul Latte di Asina, Roma, 22 marzo, 2007, 41-47.
Gastaldi G., Bertino E., Monti G., Baro C., Fabris C., Lezo A., et al. 2010. Donkey's milk detailed lipid composition. Frontiers in Bioscience, E2, 537-546.
Iacono G, Carroccio A, Cavataio F, Montaldo G, Soresi M, Balsamo V. 1992. Use of ass's milk in multiple food allergy. J Pediatr Gastroenterol Nutr,14:177-181.
Jirillo E., A.G. D'Alessandro, L. Amati, Jirillo F., Pugliese V., Martemucci G. Modulation of human aged immune response by donkey milk intake. 61st Annual Meeting of Animal Production, August 23rd - 27th , 2010, Heraklion, Crete Island, Greece.
Polidori P., Vincenzetti S. 2010. Differences of protein fractions among fresh, frozen and powdered donkey milk. Recent Pat. Food Nutr. Agric., 2(1), 56-60.
Restani P., Beretta B., Fiocchi A., Ballabio C., Galli C. L. 2002. Cross-reactivity between mammalian proteins. Annals of Allergy, Asthma & Immunology, 89 (Supplement 1),11-15.
Salimei E., Chiofalo B. Asses: milk yield and composition. 2006, in Nutrition and feeding of the broodmare, Ed N. Miraglia and W. Martin-Rosset, Wageningen Academy Press, Wageningen,The Netherlands,117-132.
Salimei E., Fantuz F., Coppola R., Chiofalo B., Polidori P., Varisco G. 2004. Composition and characteristics of ass's milk. Anim. Res., 53, 67-78.
Tafaro A., Magrone T., Jirillo F., Martemucci G., D'Alessandro A.G, Amati L., Jirillo E. 2007. Immunological properties of donkey's milk: its potential use in the prevention of atherosclerosis. Curr. Pharm. Des., 13:3711-3717.

## Claims

1. An integrated process to produce donkey milk powder products to be used for the nutritional need of infants and elderly people and adults with specific diet requirements which comprises five steps and namely a) Sanification of raw milk by ceramic microfiltration b) Concentration of sanified milk by either Nanofiltration or Reverse osmosis c) Optional enrichment of the concentrated milk with flavor d) Optional fortification of concentrated milk with extra virgin olive oil e) Production of dry powder from plain or flavor enriched or nutritionally fortified concentrated milk by freeze drying.

2. An integrated process according to claim1 where the sanification of raw milk is performed by using tubular ceramic microfiltration unit equipped with ceramic membranes with openings from 0.7 µm-1.4 µm in cross filtration mode.

3. An integrated process according to claim1 where the concentration of the sanified milk is performed by either reverse osmosis or nanofiltration polymeric membranes in tubular or spiro configuration.

4. An integrated process according to claim1 where the optional enrichment with flavor of the concentrated milk is performed by diluting of various liquid aroma constituents at various levels.

5. An integrated process according to claim1 where the optional fortification step with extra virgin olive oil is performed by mixing the oil with the concentrated milk then emulsifying the mixture by ultrasonic technology or high pressure homogenization or other method used for emulsification and homogenization.

6. An integrated process according to claim1 where the production of the dry powder from the plain or flavor enriched and/or nutritionally fortified concentrated milk is performed by freeze drying.

7. A product formulation produced according to the process of claim 1 which is in powder form and consists of dried donkey milk solids simply flavored with various aroma constituents.

8. A product formulation produced according to the process of claim 1 which is in powder form and consists of dried donkey milk solids nutritionally fortified with extra virgin olive oil encapsulated in the milk solids.

9. A product formulation produced according to the process of claim 1 which is in powder form and consists of dried donkey milk solids both flavored with various aroma constituents and nutritionally fortified with extra virgin olive oil encapsulated in the milk solids.
